# EUROPEAN PATENT APPLICATION

(11) **EP 4 641 487 A1**
(43) Date of publication of application: **29.10.2025**
(21) Application number: 24172682.7
(22) Date of filing: 26.04.2024
(51) Int. Cl.: G06T 7/00

(54) **METHOD OF OPTIMIZING WOBULATION STROKE FOR SUPER RESOLUTION**

(71) Applicant: poLight ASA, 3185 Skoppum (NO)
(72) Inventor: Lomas, Daniel, 3185 Skoppum (NO)
(74) Representative: Plougmann Vingtoft a/s

(57) **Abstract**

The method for optimizing wobulation stroke involves displaying a saturated coloured image, capturing it, and processing a predetermined region of interest. With an optimized resolution ratio of 40 to 1 to 20 to 1, vertical and horizontal metrics are independently processed.

This method serves as a calibration tool during manufacturing or for re-calibration post-manufacturing, enhancing wobulation stroke performance.

## Description

### FIELD OF THE INVENTION

The present invention relates to a method of optimizing wobulation stroke, being a method of calibration during manufacturing or a method of re-calibration after manufacturing of an optical or imaging system.

### BACKGROUND OF THE INVENTION

Wobulation is a known technique used in display technology, particularly in the context of super-resolution imaging.

Super resolution generally refers to techniques that enhance the resolution of an image beyond the limits of the original sensor or display device.

Wobulation achieves a form of super-resolution by combining multiple lower-resolution frames.

Wobulation, in general, is associated with Digital Light Processing (DLP)-based projectors and displays, which uses a Digital Micromirror Device (DMD), to create a high-resolution image through a combination of optical and electronic methods.

Therefore wobulation involves a controlled oscillation or movement of these micro-mirrors to create a higher effective resolution than what the individual mirrors can provide.

Instead of displaying a complete high-resolution image in a single frame, wobulation involves shifting the position of the micro-mirrors between frames.

The mirrors oscillate or wobble in a controlled manner, covering sub-pixels of the desired high-resolution image in successive frames.

While each individual frame might have a lower resolution, the wobulation process allows for the creation of a perceived higher resolution due to the integration of multiple frames.

In this context, the wobulation stroke refers to the controlled movement or displacement of the micro-mirrors during this process. The stroke determines the distance and direction of the movement, and optimizing wobulation stroke is crucial for achieving the best possible super-resolution effect.

Hence, an optimized method for achieving super resolution in image processing and computer vision, would be advantageous.

### OBJECT OF THE INVENTION

An object of the present invention is to provide a method for achieving super resolution in image processing and computer vision.

A further object of the present invention may be seen as to provide a method of calibration during manufacturing or a method of re-calibration after manufacturing of an optical or imaging system.

An even further object of the invention may also be seen as to provide an alternative to the prior art.

In particular, it may be seen as an object of the present invention to provide method for achieving super resolution by optimizing wobulation stroke.

### SUMMARY OF THE INVENTION

The idea of the invention is to provide a method for achieving super resolution by optimizing wobulation stroke using angular space wobulation.

By altering the angular position of the pixels, higher resolution is achieved.

More specifically, by sub-pixel wobulation, in which pixels or sub-pixels in a display are shifted or oscillated within an angular range, resolution is improved.

In particular, through angular space wobulation, a higher resolution image is created by performing a half pixel angular shift to the entire image in both X and Y so that 4 different native resolution images are projected time sequentially.

Half pixel angular shift means that each pixel in an image is shifted by half of its size in both the X and Y directions within the angular space. This implies a sub-pixel level of precision in the angular shift.

The angular shift is applied to the entire image, meaning that all pixels in the image undergo the specified half-pixel angular shift.

The angular shift is performed in both the horizontal (X) and vertical (Y) directions. This ensures a comprehensive adjustment of pixel positions.

In this context, a native resolution image refers to an image that matches the intrinsic resolution of the display device or imaging system without any form of upscaling or downscaling. The native resolution is the actual physical resolution supported by the display hardware, typically defined by the number of pixels in the horizontal and vertical dimensions.

When a display operates at its native resolution, each pixel in the input signal directly corresponds to a physical pixel on the display screen.

The wobulation process results in the creation of four different native resolution images. This implies that by performing sequential angular shifts, the system effectively captures or generates four distinct images, each corresponding to a different sub-pixel position.

The creation of four different native resolution images implies that the resulting images are generated without the need for upscaling or downscaling. Each image in the sequence maintains the original pixel density and alignment with the display device's native resolution, contributing to the overall super-resolution effect when viewed sequentially.

The images resulting from the angular shifts are projected sequentially over time. Due to this temporal aspect of the super-resolution process, each image contributes to the overall perceived higher resolution, when viewed in succession.

In summary, the wobulation process appears to be a form of temporal super-resolution where the angular shift is applied at sub-pixel precision, and the resulting images are projected sequentially to create the perception of a higher resolution. This technique leverages the combination of information from multiple sub-pixel positions to enhance the overall image quality.

The process involves a half-pixel angular shift applied to the entire image in both the X and Y directions. This sub-pixel precision allows for a more detailed adjustment of pixel positions within the angular space.

The stroke of the actuator, performing the angular shift, needs to match the half-pixel angular resolution. In this way, precise control over the actuator's movement ensures that the angular shift aligns accurately with the intended sub-pixel positions.

The coordination between the actuator's movement and the desired half-pixel angular resolution is essential for achieving optimal super-resolution performance.

A higher resolution image may be also created by performing other wobulation schemes, e.g. projecting sequentially 9 different native resolution images produced by 3x3 pixel angular shift.

Given the aforementioned considerations, in a first aspect, the invention relates to a method of optimizing wobulation stroke, the method comprising: displaying, through an image projecting device, a uniformly and fully saturated colored image, such as a solid fully green image, onto a surface; capturing, through an image capturing device, the uniformly and fully saturated colored image; and processing the image for a pre-determined region of interest.

Displaying a saturated color image onto a surface may be projecting or casting an image onto a surface, such a surface of a wall, using a projector or a similar device, i.e., the image projecting device.

A uniformly and fully saturated colored image may be a solid fully green image, i.e., an image having the primary color or dominant hue green.

Uniformly and fully saturated relate to the color distribution and maximal saturation, i.e., ensuring a fully saturated and consistent color representation. This may be quantified, through an S value ranging from 0 to 1, where 0 indicates a fully desaturated color, and 1 indicates a fully saturated color.

A solid fully green image is thus an image in which every pixel or the entire image area is filled with the color green.

The use of a saturated color image, such as a solid fully green image, simplifies the analysis of certain metrics or characteristics of the image without the potential influence of other colors. This may be beneficial when assessing metrics like row and column averages, running averages, and standard deviation.

The image is then captured by an image capturing device, such as a camera. The camera needs to be rotationally aligned with the displayed pixel matrix to with +/-5 degrees so that the processed values do in fact correspond well to the X and Y axis direction of the projector

In the following step, the image is processed for a pre-determined region of interest, i.e., size, location, or other defining characteristics of the region of interest are set before the actual processing or analysis takes place.

The pre-determined region of interest may be referred to as a small region, such as 300 x 300 pixels or less.

In some embodiments, an image resolution ratio between the capturing, performed by an image capturing device, and the displaying, achieved through an image projecting device, is in the range between 40 to 1 and 20 to 1.

Image resolution is quantitatively defined as the number of pixels in an image, typically measured in terms of pixels per unit of length, e.g., pixels per inch (PPI) or dots per inch (DPI).

According to the invention, the image capturing device or camera used for capturing the image has a higher pixel density or resolution compared to the projector, i.e., the relative scale or proportion between the camera and projector resolutions is in the range between 40 to 1 and 20 to 1.

For example, the camera used for capturing the displayed image should have 200x200 pixels for imaging a region of 5x5 pixels projected by the light engine onto a wall or through a waveguide.

In some embodiments, the processing comprises processing vertical and processing horizontal metrics independently, thereby producing independent and separate optimized values for vertical and horizontal metrics.

Each set of metrics contributes to the overall assessment of image quality and stability according to the method of the invention.

This dual approach allows for a comprehensive evaluation of the image characteristics in both the vertical and horizontal directions, ensuring a more thorough analysis of the displayed content.

By splitting up the vertical and horizontal metrics, optimized values can be obtained separately and independently.

In some other embodiments, the processing vertical metrics comprises: calculating a row average in the pre-determined region of interest; calculating a running row average over a full pixel pitch; subtracting the running row average from the row average; and calculating standard deviation providing a route mean square (RMS) ripple amplitude value for rows.

In some further embodiments, the processing horizontal metrics comprises: calculating a column average in the pre-determined region of interest; calculating a running column average over a full pixel pitch; subtracting the running column average from the column average; calculating standard deviation providing a route mean square (RMS) ripple amplitude value for columns.

The resulting RMS value serves as a measure of the amplitude of variations or fluctuations within the dataset. In the context of the described method for optimizing wobulation stroke, this represents the magnitude of changes in pixel values within the pre-determined region of interest.

RMS ripple amplitude value refers to the Root Mean Square (RMS) value of the amplitude of a ripple, i.e., fluctuations or variations, in a signal or waveform.

For a waveform, the RMS value is calculated as the square root of the average of the squared values of the signal over a specified period.

In some further embodiments, the method further comprises: recording said row and column RMS ripple values separately at different stroke values, such as between 0% and 200% of a half pixel pitch.

According to the invention, by systematically sweeping through a range of stroke values, one can analyze how each value impacts the display system and select the most effective setting for achieving the desired results.

In some embodiments, the method further comprises: plotting RMS ripples values vs stroke values for rows and column, separately.

In some further embodiments, the method further comprises: determining and storing minimum values of the plots for rows and column, separately.

The minimum values, being the independent optimized values, may then be stored and provided to the user, separately.

The method according to the first aspect of the invention may be applied as a method of calibration during manufacturing or a method of re-calibration after manufacturing.

According to the idea of the invention super resolution can be achieved by optimizing wobulation stroke using angular space wobulation.

Note that it is necessary to optimise the wobulation stroke at system level since there are a number of factors such as sample to sample variation of the wobulator performance, variations in the pixel density (pixels per degree) for each individual assembled lens and due to the response time of the actuator relative the frame rate being used. These factors can also vary over the lifetime of the product leading to the need of recalibration in the field.

The first and other aspects, embodiments and items of the present invention may each be combined with any of the other aspects, embodiments and items. These and other aspects of the invention will be apparent from and elucidated with reference to the embodiments described hereinafter.

### BRIEF DESCRIPTION OF THE FIGURES

The method of optimizing wobulation stroke according to the invention will now be described in more details with regard to the accompanying figures. The figures show one way of implementing the present invention and are not to be construed as being limiting to other possible embodiments falling within the scope of the attached claim set.
Figure 1 shows a schematic representation of the wobulation process.
Figure 2 is a plot showing the processing step of the method according to some embodiments of the invention.
Figure 3 is a plot showing RMS ripple amplitude vs stroke to find the optimal fit, i.e. lowest point.
Figure 4A and 4B, 5A and 5B and 6A and 6B shows strokes values and correspondent images.
Figure 7 is a flow chart of the method according to some embodiments of the invention.

### DETAILED DESCRIPTION OF AN EMBODIMENT

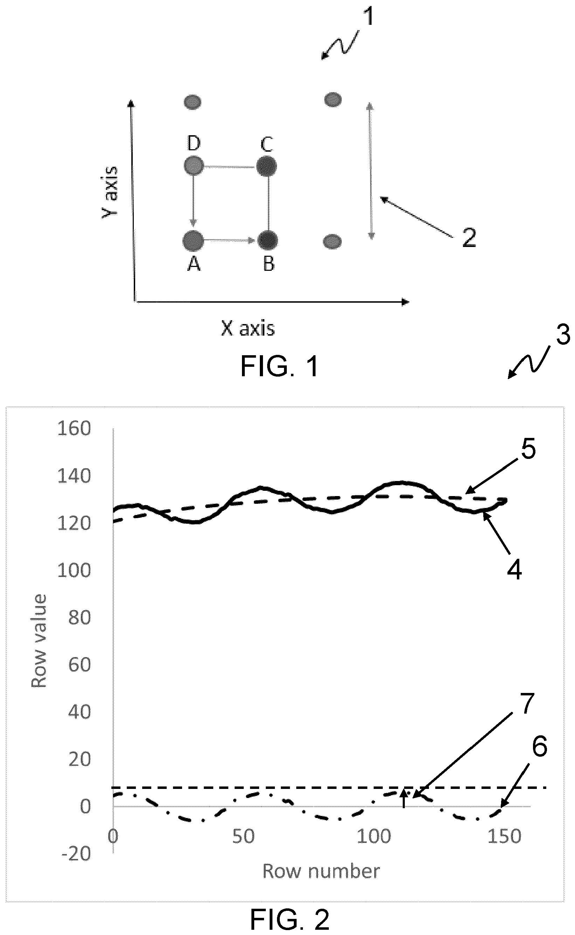

Figure 1 shows a schematic representation 1 of the wobulation process A 4 times higher resolution image is created by performing a half pixel angular shift to the entire image in both X and Y so that 4 different native resolution images, A-D, are projected time sequentially as shown in figure 1. Other wobulation schemes could be used. For example, 3 positions in X and 3 positions in Y can be used so that 9 images are combined.

For optimal performance, the stroke of the actuator performing the angular shift needs to match the with the ½ pixel angular resolution.

This can be done at component level by measuring the displacement of a collimated laser.

In figure 1, 1 pixel size 2 is shown, thus depicting the ½ pixel angular shift.

Figure 2 is a plot 3 showing the processing step of the method according to some embodiments of the invention.

The processing, i.e., processing of vertical metrics comprises calculating a row average 4 in the pre-determined region of interest, for example 300x300 pixels.

The processing of vertical metrics further comprises calculating a running row average 5 over a full pixel pitch and subtracting the running row average 5 from the row average 6. Finally, standard deviation is calculated by providing a route mean square (RMS) ripple amplitude value 7 for rows.

The processing of horizontal metric applies the same steps to columns, (not shown).

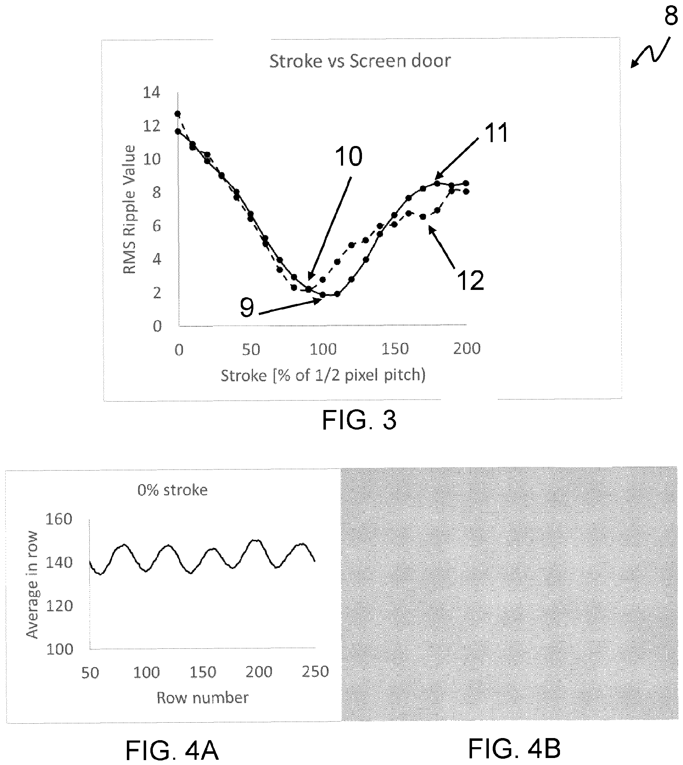

Figure 3 depicts a plot 8 showing RMS ripple amplitude values for vertical metric 11 and horizontal metric 12.

The plot distinctly shows that the stroke values corresponding to the minimum RMS ripple amplitude differ between the vertical and horizontal metrics, respectively point 9 and point 10.

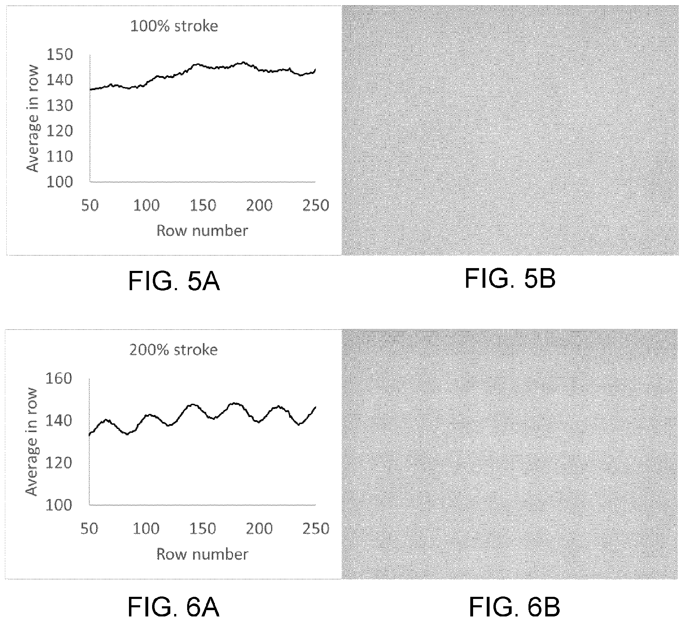

Figure 4A and 4B, 5A and 5B and 6A and 6B shows strokes values and correspondent images. The images show a grid-like pattern, being a visual artifact where the individual pixels or sub-pixels of the image are visible, referred to as screen door effect. The screen door effect shows up as a ripple in the row and column average.

Varying the stroke values across a specified range allows to observe how each value affects the system's performance.

The optimization of wobulation stroke and image processing methods aim at reducing or eliminating the screen door effect, improving image quality, clarity, and resolution.

Varying the stroke values across a specified range allows to observe how each value affects the system's performance.

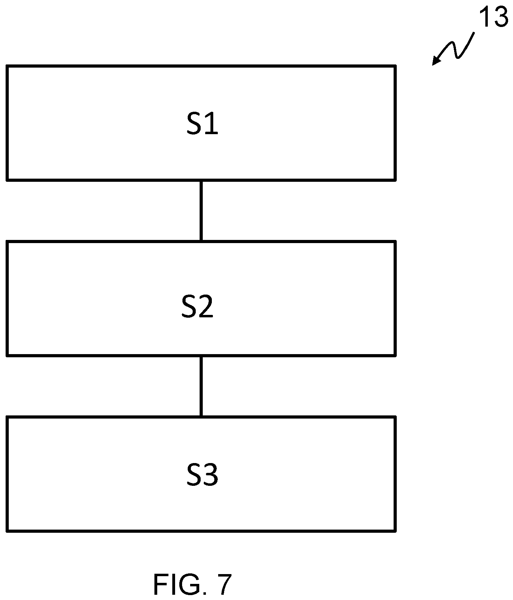

Figure 7 is a flow chart 13 of the method according to some embodiments of the invention.

The method for optimizing wobulation stroke according to some embodiments comprises:
- S1 displaying, through an image projecting device, a uniformly and fully saturated colored image, onto a surface;
- S2 capturing, through an image capturing device, the uniformly and fully saturated colored image;
- S3 processing the image for a pre-determined region of interest.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is possible and advantageous.

## Claims

1. A method for optimizing wobulation stroke, said method comprising:
- displaying, through an image projecting device, a uniformly and fully saturated colored image, such as a solid fully green image, onto a surface;
- capturing, through an image capturing device, said uniformly and fully saturated colored image;
- processing said image for a pre-determined region of interest.

2. A method according to claim 1, wherein an image resolution ratio between said capturing, performed by an image capturing device, and said displaying, achieved through an image projecting device, is in the range between 40 to 1 and 20 to 1.

3. A method according to any of the preceding claims 1-3, wherein said processing comprises processing vertical and processing horizontal metrics independently, thereby producing independent and separate optimized values for vertical and horizontal metrics.

4. A method according to any of the preceding claims 1-3, wherein said processing vertical metrics comprises:
- calculating a row average in said pre-determined region of interest;
- calculating a running row average over a full pixel pitch;
- subtracting said running row average from said row average;
- calculating standard deviation providing a route mean square (RMS) ripple amplitude value for rows.

5. A method according to any of the preceding claims 1-4, wherein said processing horizontal metrics comprises:
- calculating a column average in said pre-determined region of interest;
- calculating a running column average over a full pixel pitch;
- subtracting said running column average from said column average;
- calculating standard deviation providing a route mean square (RMS) ripple amplitude value for columns.

6. A method according to any of the preceding claims 1-5, said method further comprising:
- recording said row and column RMS ripple values separately at different stroke values, such as between 0% and 200% of a half pixel pitch.

7. A method according to any of the preceding claims 1-6, said method further comprising:
- plotting RMS ripples values vs stroke values for rows and column, separately.

8. A method according to any of the preceding claims 1-7, said method further comprising:
- determining and storing minimum values of said plots for rows and column, separately.

9. A method according to any of the preceding claims 1-8, said method being a method of calibration during manufacturing or a method of re-calibration after manufacturing.
